Europäisches Patentamt

European Patent Office

Office européen des brevets

(11) Publication number: **0 446 920 A2**

# EUROPEAN PATENT APPLICATION

(21) Application number: **91103943.6**

(22) Date of filing: **14.03.91**

(51) Int. Cl.5: **G05D 7/06**

(30) Priority: **14.03.90 JP 63538/90**

(43) Date of publication of application:
**18.09.91 Bulletin 91/38**

(84) Designated Contracting States:
**DE ES FR GB IT**

(71) Applicant: **SUMITOMO ELECTRIC INDUSTRIES, LTD.**
**5-33, Kitahama 4-chome, Chuo-ku**
**Osaka-shi, Osaka 541(JP)**

(72) Inventor: **Miyagawa, Yuichi, c/o Osaka Works**
**Sumimoto Electric Ind. Ltd. 1-3, Shimaya**
**1-chome**
**Konohana-ku, Osaka(JP)**
Inventor: **Kogo, Katsuyuki, c/o Osaka Works**
**Sumimoto Electric Ind. Ltd. 1-3, Shimaya**
**1-chome**
**Konohana-ku, Osaka(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Fluid flow control device.**

(57) A flow control device which comprises a fluid reservoir (4) communicated with a source of a fluid medium and a fluid receptacle distant from the fluid inflow port. The reservoir is adapted to temporarily store a fluid medium supplied from the fluid source and to subsequently discharge it to the fluid receptacle through a port of predetermined opening. A valve (3) is disposed between the fluid source and the fluid reservoir (4) for selectively closing and opening a passage extending therebetween, and a control unit (2) for controlling the valve (3). The control unit (2) controls the time interval at which the valve (3) is opened and the length of time during which the valve (3) is opened at a time, with respect to a desired quantity of flow of the fluid medium. Alternatively, the valve (3) may be disposed between the fluid reservoir (4) and the fluid receptacle.

*Fig. 1*

## BACKGROUND OF THE INVENTION

### (Field of the Invention)

The present invention relates to a fluid flow control for controlling the flow of a fluid medium such as, for example, gases or liquid.

### (Description of the Prior Art)

Fluid flow control devices hitherto employed are generally of a design comprising a pressure regulator for regulating the pressure of a fluid medium to be controlled to a predetermined value and a flow regulator having a flow passage of variable effective cross-sectional area and adapted to pass therethrough the fluid medium of the pressure regulated by the pressure regulator. In those fluid flow control devices, the flow of the fluid medium can be controlled by controlling the effective cross-sectional area of a flow passage in the flow regulator.

The prior art fluid flow control devices generally have a common problem in that a precise and accurate control of the effective cross-sectional area of the flow passage is required, rendering the structure thereof to be complicated, susceptible to malfunction and costly. A difficulty inherent in the prior art fluid flow control devices to accomplish a precise and accurate control of the effective cross-sectional area of the flow passage makes it very difficult to control a small flow of the fluid medium precisely.

Moreover, when the effective cross-sectional area of the flow passage is desired to be varied continuously, the use is required of a complicated adjusting mechanism including a drive device therefor, rendering the system as a whole to be costly and to require a relatively large space for installation thereof. This makes it difficult to accomplish an automation of the flow control.

## SUMMARY OF THE INVENTION

The present invention has been made with a view to substantially eliminating the above discussed problems and is therefore intended to provide an improved flow control device which is simple in structure, inexpensive to manufacture and robust, which is effective to accomplish a precise and accurate control of flow of the fluid medium and which can be automated easily.

To this end, the present invention provides a flow control device which comprises a fluid reservoir communicated with a source of a fluid medium and a fluid receptacle distant from the fluid inflow port, said reservoir being adapted to temporarily store a fluid medium supplied from the fluid source and for subsequently discharging it to the fluid receptacle through a port of predetermined opening. A valve is disposed between the fluid source and the fluid reservoir for selectively closing and opening a passage extending therebetween, and a control means for controlling the valve.

The control means controls the time interval at which the valve is opened and the length of time during which the valve is opened at a time, with respect to a desired quantity of flow of the fluid medium.

Alternatively, the valve may be disposed between the fluid reservoir and the fluid receptacle.

## BRIEF DESCRIPTION OF THE DRAWINGS

This and other objects and features of the present invention will become clear from the following description taken in conjunction with preferred embodiments thereof with reference to the accompanying drawings, in which like parts are designated by like reference numerals and in which:

Fig. 1 is a schematic diagram showing a basic conception of a fluid flow control device according to the present invention;

Figs. 2 and 3 are schematic diagrams showing modified versions of the basic conception of the fluid flow control device according to the present invention;

Fig. 4 is a schematic diagram showing a different basic conception of the fluid flow control device according to the present invention;

Fig. 5 is a schematic diagram showing a first preferred embodiment of the present invention in which the conception shown in any one of Figs. 1 to 3 is applied to a calibrating device for a partial gas-pressure sensor; and

Fig. 6 is a schematic diagram showing a second preferred embodiment of the present invention in which the conception shown in Fig. 4 is applied to a calibrating device for a partial gas-pressure sensor.

## DETAILED DESCRIPTION OF THE EMBODIMENTS

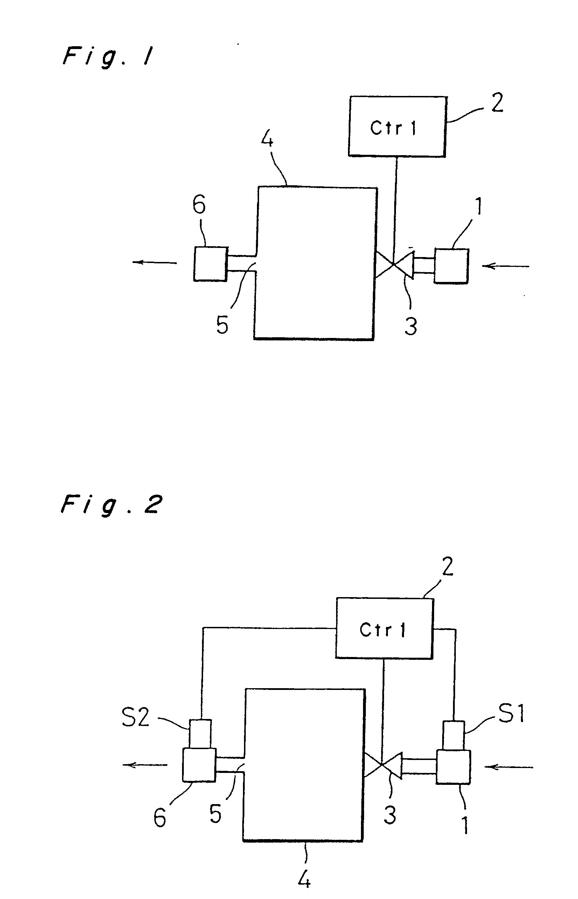

The principle of a basic conception of the present invention will first be described with reference to Fig. 1. A fluid medium such as, for example, gases or liquid, flows into a fluid reservoir 4 from a fluid inlet 1 through a valve 3, the selective opening and closure of said valve 3 being controlled by a control means 2. The fluid medium flowing into the fluid reservoir 4 is temporarily stored therein and is thereafter discharged through a fluid outlet 6 by way of a discharge port 5 which is defined in communication with the fluid reservoir 4.

The discharge port 5 has a predetermined sectional area determined in dependence on characteristics of the fluid medium and/or the amount of change in pressure of the fluid medium within the fluid reservoir 4 and, therefore, the flow of the fluid medium depends on the sectional area of the discharge port 5.

In this structure, if the valve 3 is so controlled by the control means 2 that the valve 3 can be opened at intervals of T1 seconds and the length of time during which the valve 3 is opened at a time can be T2 seconds, the average flow rate (ℓ per minute) of the fluid medium discharged from the fluid outlet 6 can be given by the following equation.

$$F = [(P2 - P1) \cdot V \cdot 60]/T1 + \{[(a \cdot T2)/60] \cdot 60\}/T1 \qquad (1)$$

wherein P1 represents the pressure of the fluid medium within the fluid reservoir 4 shortly before the opening of the valve 3; P2 represents the pressure of the fluid medium within the fluid reservoir 4 immediately after the closure of the valve 3; a represents a constant (expressed in terms of litter per minute) determined in dependence on the opening of the discharge port 5, a difference between pressures on respective sides of the discharge port 5 and physical properties of the fluid medium used; and V represents the volume (in terms of litter) of the fluid reservoir 4.

As the equation (1) above makes it clear, if respective values for those parameters P1, P2, V and a are determined, a desired average flow rate can be attained merely by controlling the time interval T1 at which the valve 3 is opened and the length of time T2 during which the valve 3 is opened at a time during the time interval T1.

In addition, if the opening of the discharge port 5, the volume V of the fluid reservoir 4 and the cross-sectional area of a flow passage adapted to be controlled by the valve 3 are chosen to have appropriate respective conditions, and if under those conditions the time interval T1 and the length of time T2 are chosen to have respective predetermined values, the pressure P2 will become equal to the fluid pressure at the fluid inlet 1 and the pressure P1 will become equal to the fluid pressure at the fluid outlet 6. Since in this condition the fluid pressures P1 and P2 can be substantially equalized to each other, the control of flow of the fluid medium can be accomplished merely by controlling the selective opening and closure of the valve 3 with no need to measure the fluid pressures P1 and P2.

Since according to the present invention the fluid flow can be controlled merely by controlling the selective opening and closure of the valve 3 as hereinabove discussed, not only can the flow control device be advantageously manufactured compact in size, but also a precise flow control can be appreciated, as compared with the prior art flow control devices wherein the fluid flow is controlled by varying the effective cross-sectional area of the fluid passage. Again, the fluid flow can be varied by varying the time interval at which the valve 3 is selectively opened and closed and the length of time during which the valve 3 is opened at a time, and therefore, the change in flow rate can be easily automated.

In a first modified conception of the present invention shown in Fig. 2, there is additionally employed a first pressure sensor S1 for detecting the fluid pressure at the fluid inlet 1 and a second pressure sensor S2 for detecting the fluid pressure at the fluid outlet 6. Respective outputs emerging from the first and second pressure sensors S1 and S2 are supplied to the control means 2.

According to the system shown in Fig. 2, the parameters P1 and P2 employed in the previously discussed equation (1) are applied to the control means 2. Therefore, even under the circumstances in which a change in fluid pressure at the fluid inlet 1 or the fluid outlet 6 with time cannot be negligible, the fluid flow can be precisely controlled to the desired flow rate F by appropriately selecting the time interval T1 and the length of time T2 to respective values required to attain the desired flow rate F.

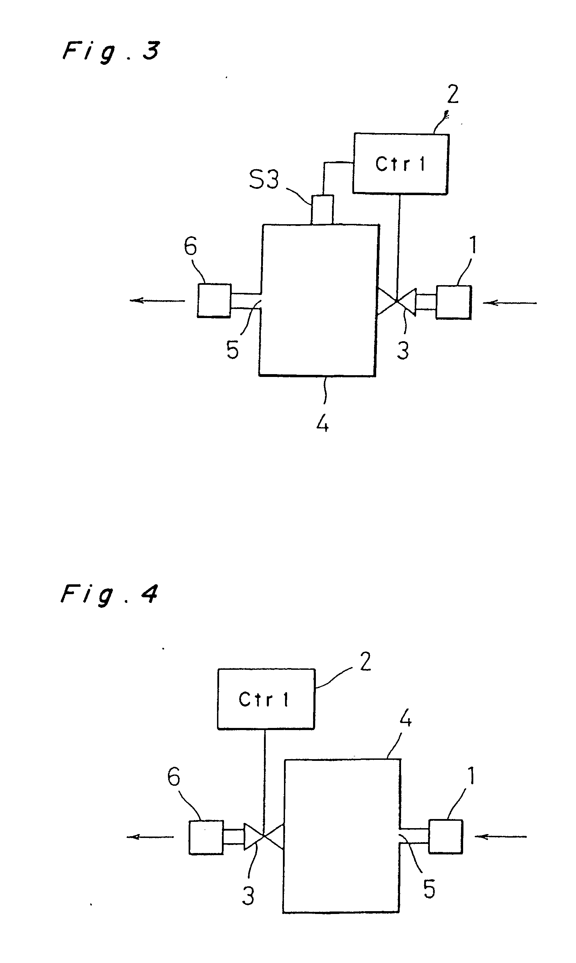

A second modified conception of the present invention is shown in Fig. 3, in which a pressure sensor S3 for detecting the pressure of the fluid medium within the reservoir 4 is added to the system of Fig. 1 so that an output from the pressure sensor S3 can be applied to the control means 2.

According to the system of Fig. 3, the fluid pressure P1 within the fluid reservoir 4 shortly before the opening of the valve 3 and the fluid pressure P2 within the fluid reservoir 4 immediately after the closure of the valve 3 may possibly be said to be detected in common by the pressure sensor S3 and, therefore, with the use of the single pressure sensor S3, the desired flow rate F can be attained substantially precisely even where the fluid pressures P1 and P2 vary with time.

3

Fig. 4 illustrates a second basic conception of the present invention which is substantially similar to that shown in Fig. 1 except that the valve 3 adapted to be controlled by the control means 2 is disposed between the fluid reservoir 4 and the fluid outlet 6. Specifically, according to the system shown in Fig. 4, the fluid medium from the fluid inlet 1 is introduced into the fluid reservoir 4 through an inlet port 5' of predetermined effective cross-sectional area for the temporary storage thereof within the fluid reservoir 4, and the fluid medium within the fluid reservoir 4 is subsequently discharged through the fluid outlet 6 by way of the valve 3.

In the structure shown in Fig. 4, where the valve 3 is so controlled that the valve 3 can be opened at intervals of T1 seconds and can open for T2 seconds at one time, the average flow rate F' ($\ell$ per minute) of the fluid medium flowing outwardly from the fluid outlet 6 can be given by the following approximate equation.

$$F' \doteqdot [(P4 - P3) \cdot V \cdot 60]/T1 \quad \cdots \quad (2)$$

wherein P4 represents the fluid pressure within the fluid reservoir 4 shortly before the opening of the valve 3 and P3 represents the fluid pressure within the fluid reservoir 4 shortly before the closure of the valve 3.

From the equation (2) above, it is clear that, if respective values for those parameters P4, P3 and V are determined to be respective predetermined values, a desired average flow rate F' can be attained merely by controlling the time interval T1 and others.

In addition, if the opening of the inlet port 5', the volume V of the fluid reservoir 4 and the cross-sectional area of a flow passage adapted to be controlled by the valve 3 are chosen to have appropriate respective conditions, and if under those conditions the time interval T1 and the length of time T2 are chosen to have respective predetermined values, the pressures P4 and P3 can be equalized to the fluid pressures at the fluid inlet 1 and the fluid outlet 6, respectively, as is the case with any one of the foregoing conceptions of the present invention shown in Figs. 1 to 3.

As is the case with the conception of Fig. 1 modified as shown in any one of Figs. 2 and 3, the conception of Fig. 4 can be modified in a similar fashion. In other words, the conception of Fig. 4 may be modified to additionally have first and second pressure sensors for detecting the fluid pressures at the fluid inlet 1 and the fluid outlet 6, respectively, so that respective outputs from the first and second pressure sensors can be supplied to the control means 2 thereby to enable the system to accommodate a change in each of the pressures P3 and P4 with time.

Similarly, the conception of Fig. 4 may be modified to additionally have a single pressure sensor for detecting the fluid pressure within the fluid reservoir 4 so that an output from such single pressure sensor can be supplied to the control means 2. According to this modified system, the pressures P3 and P4 in the equation (2) can be applied to the control means and, therefore, the system can accommodate a change in each of the pressures P3 and P4 with time merely by the use of the single pressure sensor.

Hereinafter, specific preferred embodiments of the present invention will be described.

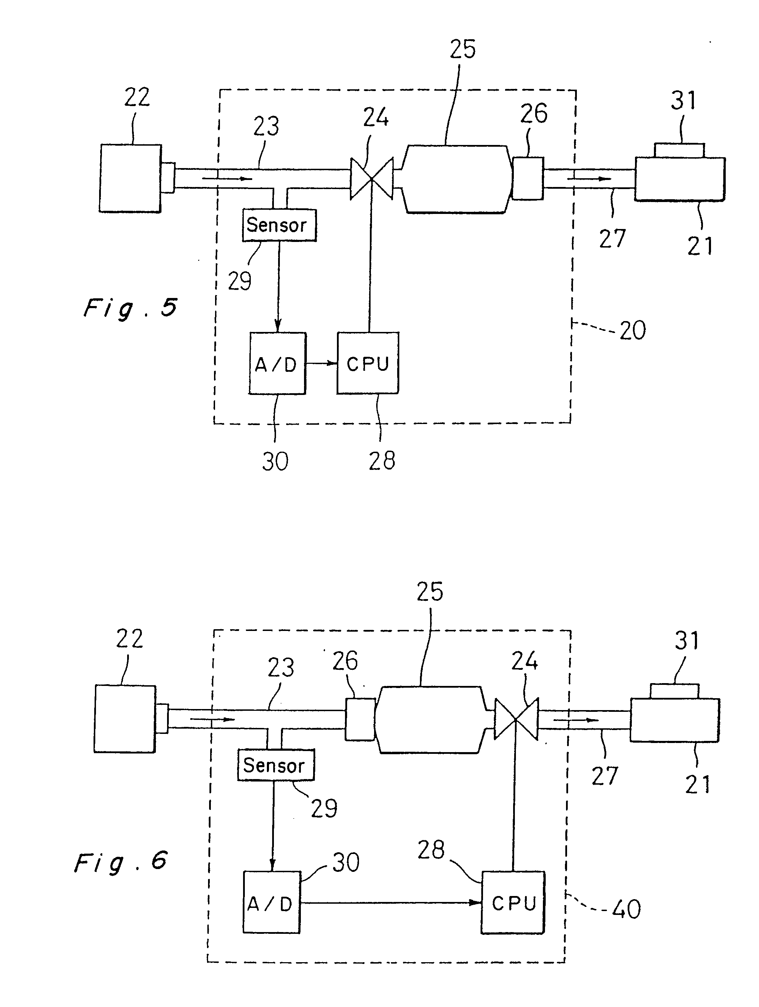

Referring now to Fig. 5, there is shown an application of the fluid flow control device. described with reference to any one of Figs. 1 to 3, to a calibrating device for a partial gas-pressure sensor. The partial gas-pressure sensor is of a type used, for example, to measure a partial pressure of gases, such as carbon dioxide and oxygen gases, contained in the blood and is generally in the form of an electrochemical sensor capable of providing an output corresponding to the partial gas-pressure on a 1 to 1 basis. when in use of the partial gas-pressure sensor, a two-point calibration is carried out with the use of two types of air-mixed gases (standard gaseous medium) having a known concentration of carbon dioxide.

The details of the calibrating device for calibrating the partial gas-pressure sensor are disclosed in, for example, the Japanese Laid-open Patent Publications No. 63-143035 and No. 63-143036, both published in 1988. a portion of which is reproduced in Fig. 5. The calibrating device so far shown is designed to detect an output from a partial gas-pressure sensor 31 mounted on a sensor mount 21 through which the standard gaseous medium for the sensor calibration flows at a predetermined flow rate. The calibration of the partial gas-pressure sensor 31 is carried out on the basis of the output from the partial gas-pressure sensor 31 generated during an introduction of, for example, two types of standard gaseous medium, containing carbon dioxide in different concentrations, into the sensor mount 31.

The flow control device is generally identified by 20 and is interposed between a gas cartridge 22, accommodating therein the standard gaseous medium, and the sensor mount 21 for controlling the rate of flow of the standard gaseous medium supplied from the gas cartridge 22. The standard gaseous medium from the gas cartridge 22 is introduced into a gas reservoir 25 through an electromagnetic valve 24 by way of a supply passage 23 of the flow control device 20. The standard gaseous medium temporarily stored in the gas reservoir 25 is subsequently supplied to the sensor mount 21 through an orifice 26 by way of a discharge passage 27.

The electromagnetic valve 24 is controlled by a microcomputer (CPU) 28 so as to selectively open and close, and an output generated from a semiconductor pressure sensor 29 for detecting the pressure of the standard gaseous medium within the supply passage 23 is applied to the microcomputer 28 through an analog-to-digital converter (A/D) 30.

In the construction shown in Fig. 5, the pressure of the standard gaseous medium supplied from the gas cartridge 22 varies within the range of, for example 0.5 to 7 atms. (relative pressure) depending on the quantity of the standard gaseous medium remaining within the gas cartridge 22. On the other hand, the pressure of the standard gaseous medium supplied to the sensor mount 21 through the discharge passage 27 is equal to the atmospheric pressure at all times (the relative pressure being zero atm.) In other words, according to the system shown in Fig. 5, the pressure P1 in the equation (1) above is constant and the pressure P2 in the equation (1) above varies with time in dependence on the quantity of the standard gaseous medium remaining within the gas cartridge 22.

In view of the foregoing, the present invention makes use of the semiconductor pressure sensor 29 to monitor the pressure P2 at all times to provide the microcomputer 28 with an output from the pressure sensor 29 through the analog-to-digital converter 30. By so doing, the time parameters T1 and T2, both used in the equation (1) above can be adjusted at any time in dependence on a change in pressure P2 with time, thereby to make it possible to supply the standard gaseous medium to the sensor mount 21 at a desired flow rate accurately.

By way of example, assuming that the gas reservoir 25 has a volume of 0.22 mℓ, and if the effective cross-sectional area of an opening at the orifice 26 corresponding to the port 5 shown in Fig. 1 is adjusted to render the constant a used in the equation (1) above to be within the range of 5 to 20 mℓ/min., the opening of the electromagnetic valve 24 for 0.1 second at intervals of 3.5 to 37 seconds depending on the pressure of the standard gaseous medium can result in the supply of the standard gaseous medium to the sensor mount 21 at a rate of about 2 mℓ/min.

The application of the conception shown in and described with reference to Fig. 4 to the sensor calibrating device is shown in Fig. 6. According to this preferred embodiment of the present invention, the flow control device is generally identified by 40.

Referring now to Fig. 6, the system of Fig. 6 is different from that of Fig. 5 in that the electromagnetic valve 24 and the orifice 26 shown in Fig. 6 are disposed at respective positions reverse to those shown in Fig. 5 with respect to the gas reservoir 25. The microcomputer (CPU) 28 is applied with an output from the semiconductor pressure sensor 25 through the analog-to-digital converter 30, the sensor 23 being used to detect the pressure of the standard gaseous medium flowing through the supply passage 23. The arrangement shown in Fig. 6 makes it possible to attain assuredly the desired flow rate appropriate to a change in pressure P4, used in the equation (2) above, incident to a reduction in quantity of the standard gaseous medium remaining within the gas cartridge 22.

Thus, according to a broad aspect of the present invention, the flow control can be accomplished by controlling the interval at which the valve is selectively opened and closed by the control means and the length of time during which the valve is opened at a time. Therefore, the effective cross-sectional area of a flow passage need not be adjusted such as required in the prior art flow control devices. Accordingly, a simple structure of the flow control device suffices to accomplish the favorable and accurate flow control.

Consequent upon the capability of making the flow control device compact in size, not only can the manufacturing cost be reduced, but also the flow control device according to the present invention can be rendered robust for a prolonged period of use.

moreover, since the flow rate can readily be changed merely by adjusting the interval at which the valve is selectively opened and closed and the length of time during which the valve is opened at a time, an automated adjustment of the flow rate can easily be accomplished.

Although the present invention has fully been described in connection with the preferred embodiments thereof with reference to the accompanying drawings, it is to be noted that various changes and modifications are apparent to those skilled in the art. By way of example, the application of the flow control device according to the present invention may not be always limited to the sensor calibrating device, but may be applied to any other application.

Accordingly, such changes and modifications are to be understood as included within the scope of the present invention as defined by the appended claims, unless they depart therefrom.

## Claims

1. A flow control device which comprises:

   a fluid reservoir communicated with a source of a fluid medium and a fluid receptacle distant from the fluid fluid source, said reservoir being adapted to temporarily store a fluid medium supplied from the fluid source and for subsequently discharging it to the fluid receptacle through a port of predetermined opening;

   a valve disposed between the fluid source and the fluid reservoir for selectively closing and opening a passage extending therebetween; and

   a control means for controlling the valve, said control means being operable to control the time interval at which the valve is opened and the length of time during which the valve is opened at a time, with respect to a desired quantity of flow of the fluid medium.

2. The flow control device as claimed in Claim 1, further comprising a first pressure detecting means for detecting a pressure of the fluid medium at the fluid medium source and for outputting a first pressure signal to the control means.

3. The flow control device as claimed in Claim 2, further comprising a second pressure detecting means for detecting a pressure of the fluid medium at the fluid receptacle and for outputting a second pressure signal to the control means.

4. The flow control device as claimed in Claim 1, further comprising a pressure detecting means for detecting a pressure of the fluid medium in the fluid reservoir and for outputting a pressure signal to the control means.

5. A flow control device which comprises:

   a fluid reservoir communicated with a source of a fluid medium and a fluid receptacle distant from the fluid fluid source, said reservoir being adapted to temporarily store a fluid medium supplied from the fluid source through a port of predetermined opening and for subsequently discharging it to the fluid receptacle;

   a valve disposed between the fluid reservoir and the fluid receptacle for selectively closing and opening a passage extending therebetween; and

   a control means for controlling the valve, said control means being operable to control the time interval at which the valve is opened and the length of time during which the valve is opened at a time, with respect to a desired quantity of flow of the fluid medium.

*Fig. 1*

*Fig. 2*

**Fig.3**

**Fig.4**

Fig.5

Fig.6